# EUROPEAN PATENT APPLICATION

(11) **EP 1 826 994 A2**
(43) Date of publication of application: **29.08.2007**
(21) Application number: 07102631.4
(22) Date of filing: 19.02.2007
(51) Int. Cl.: H04M 1/725, H04M 19/04

(54) **Apparatus and method for controlling bell sound in portable terminal having hard disc drive**

(30) Priority: 24.02.2006 KR 20060018242
(71) Applicant: Samsung Electronics Co., Ltd., Suwon-si, Gyeonggi-Do (KR)
(72) Inventor: Ahn, Chi-Hun, Suwon-si Gyeonggi-do (KR)
(74) Representative: Zimmer, Franz-Josef

(57) **Abstract**

Disclosed are an apparatus and a method for controlling a bell sound in a portable terminal having a hard disc drive. The apparatus copies and stores a part of an MP3 (MPEG-1, Audio Layer-3) file in a memory when the MP3 file stored in the hard disc drive is set as the bell sound. Then, when the MP3 file stored in the hard disc drive is intended to be output as the bell sound, the apparatus first outputs the corresponding MP3 file stored in the memory. Next, when it is possible to access the hard disc drive, the apparatus reads and outputs sound source data synchronously with the sound source data, which are output before accessing the hard disc drive, from the hard disc drive. Thus, in the case where the MP3 file stored in the hard disc drive is to be output as the bell sound when a call is received in a portable terminal, it is possible to instantly output the corresponding MP3 file as the bell sound without a time delay necessary for accessing the hard disc drive.

## Description

The present invention relates to an apparatus and a method for controlling a bell sound in a portable terminal, and more particularly to an apparatus and a method for controlling an output of bell sound when an MP3 (MPEG-1, Audio Layer-3) file stored in a Hard Disc Drive (HDD) of a portable terminal is output as a bell sound.

As portable terminals have become commonplace, there is a tendency to develop portable terminals with multi-functions, to which various functions as well as voice communication are added in order to satisfy consumer demands. Further, supply of various dynamic contents has been visualized as wireless networks have opened and rapidly developed and high-end portable terminals have become commonplace. Memory and data-communication service rates are the central theme for providers and users as demand for large scale contents increase capacity. Accordingly, hard disc drives with a large memory capacity are typically embedded as auxiliary memory devices in portable terminals in order to receive the large scale contents.

Typically, the portable terminals have a function of setting bell sounds for groups or specific recipients respectively, when a call is received in the portable terminal. Further, the portable terminals with a function of playing MP3 files can set downloaded MP3 files as bell sounds. If the portable terminals have a hard disc drive mounted therein, such downloaded MP3 files can be stored in the hard disc drive.

In a portable terminal having a hard disc drive, the hard disc drive is sensitive to temperature and may be unusable at certain temperatures, for example low temperatures e.g., below zero degrees Celsius, which may slow data access to/from a hard disc drive. Additionally, during low temperature operation, the portable terminal may not recognize the hard disc drive, or may display corrupt data when an attempt is made to access the data in the hard disc drive. Further, since battery consumption increases when driving the hard disc drive, the portable terminal typically does not supply power to the hard disc drive in a mode in which the hard disc drive is not used. Accordingly, only when the operation of the hard disc drive is necessary, does the portable terminal supply power to the hard disc drive.

However, about 2.5 seconds typically elapses until a controller of the portable terminal can access the hard disc drive after the hard disc drive is powered up.

Therefore, if a user sets the MP3 file, stored in the hard disc drive, to be output as the bell sound when a call is received from a specific recipient, the bell sound is output after about 2.5 seconds elapse from the time the call is received.

In the conventional portable terminal as described above, in the case where the MP3 file stored in the hard disc drive should be output as the bell sound according to the reception of the call, since a predetermined time elapses until the controller of the portable terminal can access the hard disc drive, the bell sound cannot be instantly output. If about 2.5 seconds is necessary for operating the hard disc drive so as to access the data, the user cannot immediately hear the bell sound as soon as the call is received. Specifically, the bell sound informing of the reception of the call is generated about 2.5 seconds late.

Accordingly, the present invention has been made to solve the above-mentioned problems occurring in the prior art, and it is the object of the present invention to provide an apparatus and a method for controlling a bell sound in a portable terminal having a hard disc drive, which can output a MP3 file stored in the hard disc drive as the bell sound without time delay as soon as a call is received.

This object is solved by the subject matter of the independent claims.

Preferred embodiments are defined in the dependent claims.

In order to accomplish the object of the present invention, according to an aspect of the present invention, there is provided an apparatus for controlling a bell sound in a portable terminal having hard disc drive, the apparatus including a memory for storing a bell sound setting table including at least one recipient phone number and bell sounds set to correspond to the at least one recipient phone number; a hard disc drive for storing at least one MP3 file; and a controller for reading and copying the MP3 file as much as a preset data size from the hard disc drive in order to set the bell sound, so as to store the copied MP3 file in the memory, when a signal is input in order to set the MP3 file stored in the hard disc drive as the bell sound corresponding to the at least one recipient phone number.

The controller outputs the MP3 file as the bell sound from the memory and simultaneously operates the hard disc drive if the bell sound set to correspond to the at least one recipient phone number is the MP3 file stored in the hard disc drive according to a reception of a call, and identifies a position of sound source data of the MP3 file output from the memory so as to output the bell sound next to the position of the sound source data identified from the corresponding MP3 file stored in the hard disc drive if it is possible to access the hard disc drive.

In order to accomplish these and other objects of the present invention, according to another aspect of the present invention, there is provided a method for controlling a bell sound in a portable terminal which includes a memory for storing a bell sound setting table having at least one recipient phone number and a bell sound set to correspond to the recipient phone number, and a hard disc drive for storing at least one MP3 file, which includes determining whether a signal to set an MP3 file stored in the hard disc drive as the bell sound corresponding to the recipient phone number has been input; and copying and storing the MP3 file by a preset data size from the hard disc drive, in order to set the MP3 file as the bell sound, if there it is determined that the signal for setting the MP3 file stored in the hard disc drive as the bell sound has been input.

The method further includes detecting if a call is received, and determining if the bell sound set to correspond to the recipient phone number is an MP3 file stored in the hard disc drive when the call is received; outputting the MP3 file as the bell sound from the memory and simultaneously operating the hard disc drive, if the bell sound set to correspond to the recipient phone number is the MP3 file stored in the hard disc drive; and identifying a position of sound source data of the MP3 file output from the memory if access to the hard disc drive can be made, and outputting the MP3 file, which is stored in the hard disc drive, next to the identified position of sound source data as the bell sound.

The present invention will be more apparent from the following detailed description taken in conjunction with the accompanying drawings, in which:
FIG. 1 is a block diagram illustrating a configuration of a portable terminal having a hard disc drive according to the present invention;
FIG. 2 is a flowchart illustrating a process for setting an MP3 file to bell sound in the portable terminal according to the present invention;
FIG.s 3A-3C are tables illustrating a list of phone numbers and MP3 files stored in the portable terminal in a case of setting the MP3 files to bell sound, according to the present invention;
FIG. 4 is a flowchart illustrating a process for outputting the MP3 files as the bell sound according to the present invention; and
FIG. 5 is a graph illustrating an MP3 file output from a memory and a hard disc drive when the MP3 file is output as a bell sound, according to the present invention.

Hereinafter, preferred embodiments of the present invention will be described in detail with reference to the accompanying drawings. Identical reference numerals are used to denote the same structural elements throughout the drawings. In the following description of the present invention, a detailed description of known functions and configurations incorporated herein is omitted to avoid making the subject matter of the present invention unclear.

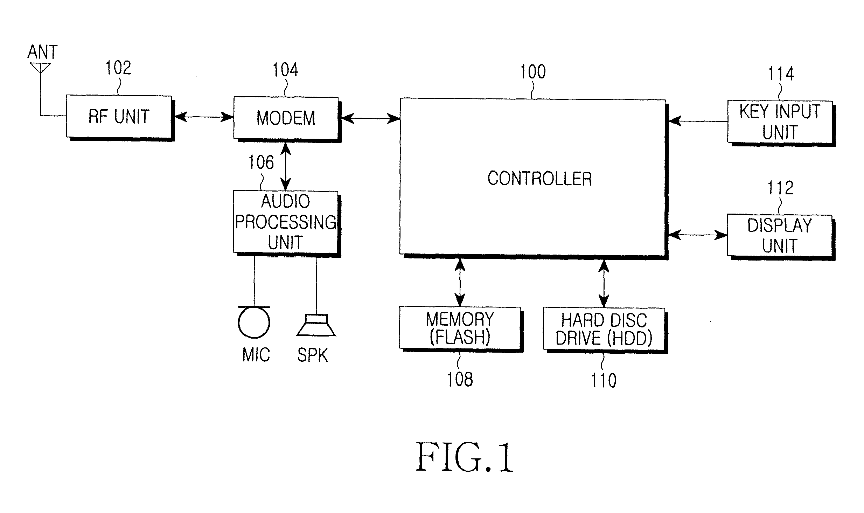

FIG. 1 is a block diagram illustrating a configuration of a portable terminal having a hard disc drive according to the present invention. Referring to FIG. 1, the portable terminal includes a controller 100, an RF (Radio Frequency) unit 102, a modem 104, an audio processing unit 106, a memory 108, a hard disc drive 110, a display unit 112, and a key input unit 114.

The RF unit 102 carries out a wireless communication function of the portable terminal, and includes an RF transmitter for up-converting and amplifying a frequency of transmitted signals and an RF receiver for down-converting and low-noise-amplifying a frequency of received signals. The modem 104 includes a transmitter for encoding and modulating the signals transmitted through the RF unit 102, and a receiver for decoding and demodulating the received signals.

The audio processing unit 106 may comprise a CODEC (CODER/DECODER, not shown), which includes a data CODEC for processing packet data, etc. and an audio CODEC for processing audio signals such as voice. The audio processor 106 converts and reproduces digital audio signals received from the modem 104 into analog signals through the audio CODEC, or converts analog audio signals received from a microphone into digital audio signals through the audio CODEC so as to transmit the digital audio signals to the modem 104.

The memory 108 may include a Read Only Memory (ROM), and a Random Access Memory (RAM), etc. for storing various programs and data. Further, the memory can store programs for controlling general operations of the portable terminal, and control programs for outputting MP3 files stored in the hard disc drive, such as the bell sound when a call is received. The memory 108 temporarily store data generated during the performance of the programs.

Furthermore, the memory 108 may store a sound source with the title of the MP3 file. In which case, the sound source is extracted from the MP3 file set as the bell sound, among the MP3 files stored in the hard disc drive 110 and has a size sufficient to be output for a preset time. For example, in the case where five MP3 files are set as the bell sounds from the MP3 files stored in the hard disc drive 110, five sound sources having the size sufficient to be output for the preset time are stored along with their titles, and also five indexes are mapped and stored. Further, the memory 108 has a bell sound table including recipient names, recipient phone numbers, and bell sound information corresponding to the recipient names. At this time, the bell sound information may be related to the bell sounds stored in the memory 108, or related to the MP3 files stored in the hard disc drive 110.

The hard disc drive 110 stores data such as content data, MP3 files, etc. According to the present invention, the hard disc drive 110 stores a plurality of MP3 files.

A Liquid Crystal Display (LCD) may be used as the display unit 112. The display unit 112 may include an LCD controller, a memory for storing image data, and an LCD device, etc. Further, if a touch-screen-type LCD is used, the LCD can be used as an input unit.

The key input unit 114 is provided with keys for inputting numeral and character information and function keys for setting various functions.

The controller 100 generally controls the portable terminal. Specifically, in the case where the MP3 file stored in the hard disc drive 110 is set as the bell sound according to the present invention, the controller 100 of the present invention copies the sound source data with a preset size from the corresponding MP3 file stored in the hard disc drive 110, and then stores the sound source data along with the corresponding file name in the memory 108. On the other hand, in the case where the MP3 file stored in the hard disc drive 110 is output as the bell sound, the controller 100 outputs the corresponding MP3 stored in the memory 108, and at the same time operates the hard disc drive 110. Next, the controller 100 accesses the hard disc drive 110 and identifies a position of the sound source data of the MP3 file read and output from the memory 108, so as to output the bell sound source data next to the sound source data, at a position which is identified, from the corresponding MP3 stored in the hard disc drive 110 as the bell sound.

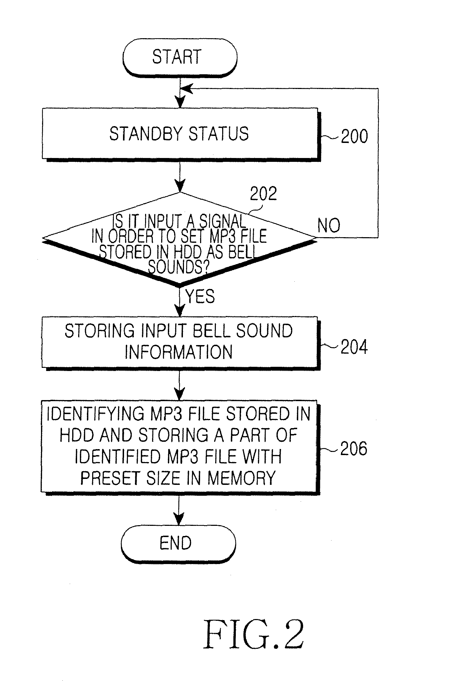

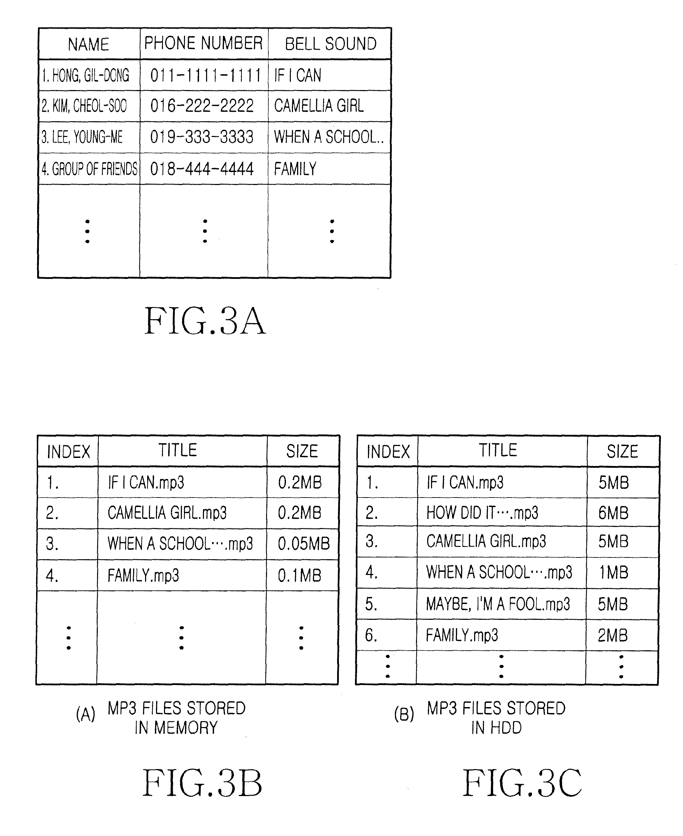

Hereinafter, the operation of setting the MP3 file as the bell sound in the portable terminal as configured in FIG. 1 will be described with reference to FIG. 2 and 3A-3C, which illustrate a flow chart of a process for setting an MP3 file to bell sound in the portable terminal; and tables illustrating a list of phone numbers and MP3 files stored in the portable terminal in a case of setting the MP3 files to bell sound, respectively.

The controller 100 maintains its standby state at step 200, and then sets the MP3 file stored in the hard disc drive as the bell sound at step 202. Next, the controller 100 stores information about the bell sound setting in the memory 108 at step 204. At this time, the information about the stored bell sound setting includes information on the recipient names, the phone numbers, and the set bell sounds corresponding to the recipient names. Further, the input bell sound information may be the bell sounds stored in the memory 108, or the MP3 files stored in the hard disc drive 110. Hereinafter, the bell sound using the MP3 file will be referred to as MP3 bell sound. When the MP3 bell sounds are set to correspond to specific recipients respectively, the controller 100 stores the select MP3 bell sound along with the corresponding recipient name and phone number in the bell sound setting table shown in FIG. 3A. Such a bell sound setting table is realized as a phone number table to store the recipient names and the phone numbers.

After the bell sound setting information is stored as described above, the controller 100 identifies the corresponding MP3 file stored in the hard disc drive 110 at step 206, and stores a part of the identified MP3 file with a preset data size in the memory 108. Specifically, the sound source data, which has a size sufficient to be output during a predetermined time period (e.g., for a preset time such as 5 sec, etc.) and is extracted from the MP3 file set as the bell sound from the MP3 files, is stored along with the title of the MP3 file in the memory 108. For example, when a user sets a MP3 file with the title of "If I can" among the MP3 files stored in the hard disc drive shown in FIG.s 3A-3C as the bell sound for a recipient "Hong, Gil-Dong" at step 202, the bell sound with the title of "If I can" is stored in the bell sound setting table shown in FIG. 3A so as to correspond to a bell sound class corresponding to the name of "Hong, Gil-Dong." Further, a part of the MP3 with the title of "If I can," which is extracted from the MP3 files stored in the hard disc drive 110 shown in FIG. 3B and stored in the Index 1, is copied by a preset data size and stored in the memory 108. The MP3 files with the titles of "If I can," "Camellia girl," "When a school bell rings," and "Family," etc., which are bell sounds stored in the bell sound setting table of FIG. 3A among the plurality of MP3 files stored in the hard disc drive, are respectively and partially copied by a preset data size and stored in the memory 108.

According to the present invention as described above, in the case where the MP3 files stored in the hard disc drive 110 are stored as the bell sounds, a part of the MP3 with a predetermined size and/or a predetermined play time, such as, for example, ten seconds, is stored in the memory. Although the part of the MP3 file to be copied has a size of corresponding to a play time about ten seconds, it is possible to set and change the size of the part of the MP3 file to be copied, depending on the capacity of the memory. Then, in the case where the MP3 files stored in the hard disc drive 110 are output as the bell sounds, first the corresponding MP3 file stored in the memory 108 is output and simultaneously the hard disc drive is driven. Then, if it is possible to access to the data, the corresponding MP3 file stored in the hard disc drive 110 is output as the bell sound. At this time, the MP3 file stored in the hard disc drive 110 is continuously output synchronously with to the sound source data output before the controller 200 accesses the hard disc drive. As described above, in the case where the MP3 file stored in the hard disc drive 110 is output as the bell sound, first the corresponding MP3 file stored in the memory 108 is output, thereby allowing the controller 200 to access the hard disc drive without time requiring a delay before playing the corresponding MP3 file and instantly output the corresponding MP3 file as the bell sound upon occurrence of a predetermined event (e.g., an incoming call, a voice message, etc.).

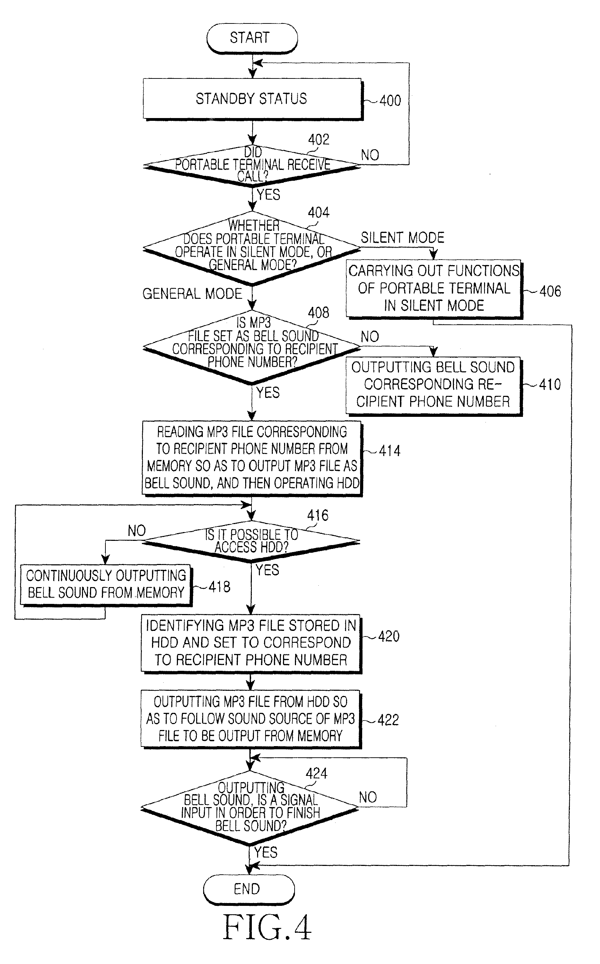

Hereinafter, the process of outputting the bell sound will be described with reference to FIG. 4, which is a flowchart illustrating a process for outputting the MP3 file as the bell sound. The process is carried out when a controller 200 receives a call, in the state that only the sound source data with the preset size corresponding a heading portion of the MP3 file stored in the hard disc drive 110 is stored in the memory 108 when the MP3 file stored in the hard disc drive 110 is set as the bell sound as shown in FIG. 2.

With reference to FIG. 4, the controller 100 maintains the standby status at step 400, and detects if the call is received at step 402. If the call is received, the controller 100 detects if the current operation mode of the portable terminal is set to a silent mode, or a general mode at step 404. If the operation mode of the portable terminal is set to the silent mode, the controller proceeds to step 406 so as to carry out the silent mode. Here, in the silent mode, the controller 100 does not output the bell sound responding to the call reception and allows vibration to inform a user of the call reception.

When the controller 100 detects that the portable terminal is in the general mode at step 404, the controller proceeds to step 408, so as to detect if the bell sound corresponding to the recipient phone number is an MP3 file stored in the hard disc drive.

As the result of the detection at step 408, if the bell sound corresponding to the recipient phone number is an MP3 file stored in the hard disc drive 110, the controller carries out step 414. Otherwise, the controller performs step 410 so as to output the bell sound corresponding to the recipient phone number. The bell sound is output from the memory 108 at step 410.

On the other hand, as the result of the detection at step 408, in the case where the bell sound corresponding to the recipient phone number is an MP3 file stored in the hard disc drive 110, the controller identifies the MP3 file set to correspond to the recipient phone number with reference to the bell sound setting table stored in the memory 100 at step 414. Hereinafter, the controller 100 outputs the MP3 file identified in the memory 108 as the bell sound and at the same time operates the hard disc drive 110.

After supplying power to the hard disc drive so as to operate the hard disc drive, the controller 100 determines whether the hard disc drive 110 can be accessed so as to read and write the data.

At the result of the determination at step 416, when the hard disc drive 110 can be accessed, the controller proceeds to step 420. Otherwise, the controller continues to output the corresponding MP3 file as the bell sound from the memory 108.

As the result of the determination at step 416, in the case the hard disc drive 110 can be accessed, the controller identifies the MP3 file set to correspond to the recipient phone number stored in the hard disc drive 110 at step 420. Hereinafter, at step 422, the controller 100 outputs the sound source data synchronously with the sound source data of the identified MP3 file output from the memory 108.

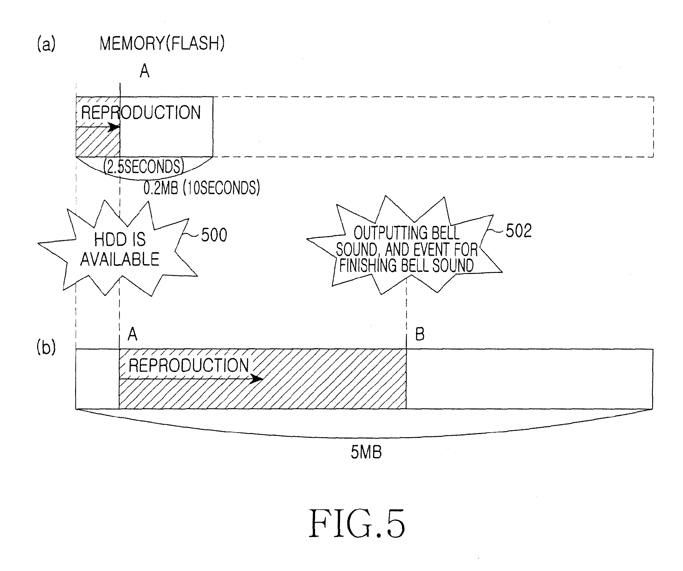

Hereinafter, the process of outputting the bell sound while the MP3 file is reproduced will be described with reference to FIG. 5 which is a graph illustrating an MP3 file output from a memory and a hard disc drive when the MP3 file is output as a bell sound. In the process, the controller accesses the hard disc drive 110 so as to output the bell sound, during the reproduction of the MP3 file stored in the memory 108.

In the case where the MP3 file stored in the hard disc drive 110 is output as the bell sound, the controller outputs the sound source data of the corresponding MP3 file as the bell sound from the memory 108 shown in FIG. 5A, and simultaneously operates the hard disc drive 110. When the hard disc drive can be accessed to retrieve data as indicated by the reference numeral 500 after the sound source data of the corresponding MP3 is output as the bell sound from the memory 108 and a predetermined time period such as, for example, 2.5 seconds elapses, the MP3 file with the same title stored in the hard disc drive 100 is output as the bell sound. At this time, the controller 100 of the portable terminal starts to output the sound source data of the corresponding MP3 file as the bell sound from the memory 108. Then, when 2.5 seconds elapse, the controller 100 identifies a position A of the reproduced sound source data with the same title and reproduces the MP3 file with the same title stored in the position A of the hard disc drive. Next, when an event occurs at a position B of the reproduced MP3 file in order to stop outputting of the bell sound, the controller stops outputting of the bell sound at step 502.

In the meantime, the controller 100 examines if there exists an input for stopping the outputting of the bell sound, at step 424. Here, the input for stopping the outputting of the bell sound refers to a key input for carrying out communication (or other input for carrying out a communication, e.g., opening a flip phone), a key input for refusing a call from a communication partner, or an input of an event signal such as a signal for finishing a call reception, which is input in a system. As the result of the examination at step 424, if a signal is input in order to stop the outputting of the bell sound, the output of the bell sound is stopped. Otherwise, the controller continuously outputs the bell sound.

As described above, in the case where the MP3 file stored in the hard disc drive should be output as the bell sound according to the reception of the call in the portable terminal, the present invention has an advantage in that the MP3 file can be instantly output as the bell sound without time delay.

While the invention has been shown and described with reference to certain preferred embodiments thereof, it will be understood by those skilled in the art that various changes in form and details may be made therein without departing from the scope of the invention as defined by the appended claims.

## Claims

1. An apparatus for controlling a bell sound in a portable terminal having hard disc drive, comprising:
a memory for storing a bell sound setting table including at least one recipient phone number and bell sounds set to correspond to the recipient phone number;
a hard disc drive for storing at least one MP3 file; and
a controller for reading and copying at least a predetermined portion of the MP3 file as much as a preset data size from the hard disc drive in order to set the bell sound, so as to store the copied MP3 file in the memory, when a signal is input in order to set the MP3 file stored in the hard disc drive as the bell sound corresponding to the recipient phone number.

2. The apparatus as claimed in claim 1, wherein the bell sound set to correspond to the recipient phone number includes the predetermined portion of the MP3 file corresponding to the bell sound stored in the memory, and the corresponding MP3 file stored in the hard disc drive.

3. The apparatus as claimed in claim 1 or 2, wherein the controller:
outputs the MP3 file as the bell sound from the memory and simultaneously operates the hard disc drive if the bell sound set to correspond to the recipient phone number is the MP3 file stored in the hard disc drive according to a reception of a call; and
identifies a position of sound source data of the MP3 file output from the memory so as to output the bell sound synchronously with the sound source data identified from the corresponding MP3 file stored in the hard disc drive when it is possible to access the hard disc drive.

4. The apparatus as claimed in claim 3, wherein the controller continuously outputs the corresponding MP3 file as the bell sound from the memory until the controller can access the hard disc drive to retrieve data.

5. A method for controlling a bell sound in a portable terminal which includes a memory for storing a bell sound setting table having at least one recipient phone number and a bell sound set to correspond to the recipient phone number, and a hard disc drive for storing at least one MP3 file, the method comprising the steps of:
detecting if there is input a signal to set an MP3 file stored in the hard disc drive as the bell sound corresponding to the recipient phone number; and
copying and storing at least a predetermined portion of the MP3 file from the hard disc drive to the memory, in order to set the MP3 file as the bell sound, if there is input a signal for setting the MP3 file stored in the hard disc drive as the bell sound.

6. The method as claimed in claim 5, wherein the bell sound set to correspond to the recipient phone number includes the predetermined portion of the bell sound stored in the memory, and the corresponding MP3 file stored in the hard disc drive.

7. The method as claimed in claim 5 or 6, further comprising:
detecting if a call is received, and determining if the bell sound set to correspond to the recipient phone number is an MP3 file stored in the hard disc drive when the call is received;
outputting the MP3 file as the bell sound from the memory and simultaneously operating the hard disc drive, if the bell sound set correspond to the recipient phone number is the MP3 file stored in the hard disc drive; and
identifying a position of sound source data of the at least a portion of the MP3 file output from the memory when it is possible to access the hard disc drive, and outputting the MP3 file, which is stored in the hard disc drive, synchronously with the identified position of sound source data as the bell sound.

8. The method as claimed in claim 7, further comprising continuously outputting the corresponding MP3 file as the bell sound from the memory before accessing the hard disc drive.
